# EUROPEAN PATENT APPLICATION

(11) **EP 1 447 805 A1**
(43) Date of publication of application: **18.08.2004**
(21) Application number: 03758714.4
(22) Date of filing: 07.10.2003
(51) Int. Cl.: G11B 20/10, G11B 20/12, G06F 3/06

(54) **DISC INFORMATION OUTPUT METHOD, PROGRAM, AND RECORDING MEDIUM**

(30) Priority: 11.10.2002 JP 2002298760
(71) Applicant: MATSUSHITA ELECTRIC INDUSTRIAL CO., LTD., Kadoma-shi, Osaka 571-8501 (JP)
(72) Inventor: NISHIMURA, Takuya, Osaka-shi, Osaka 545-0053 (JP)
(74) Representative: Grünecker, Kinkeldey, Stockmair & Schwanhäusser Anwaltssozietät
(86) International application number: PCT/JP2003/012812
(87) International publication number: WO 2004/034394

(57) **Abstract**

When the kind of disk is changed by reformatting the disk inserted, a control cannot be made in accordance with the standard corresponding to the kind of the reformatted disk.

There are provided an output step of outputting to an STB 100 the information indicating that reading the disk information is impossible when a DVD recorder 200 receives a read request of the disk information from the STB 100 having a read right of the descriptor during initialization of the replaceable disk, and an acquisition step of acquiring a descriptor identifier from the DVD recorder 200, when the STB 100 requests again the read right of the descriptor firstly after the DVD recorder 200 outputs to the STB 100 the information indicating that reading the disk information is impossible.

## Description

### Technical Field

The present invention relates to a replaceable disk recording and reproducing apparatus controlled via a digital interface, a disk information output method, a disk information acquisition method, a program and a recording medium.

### Prior Art

In recent years, the IEEE (The Institute of Electrical and Electronics Engineers, Inc.) 1394 system has gained attention as a serial transmission system. The IEEE1394 system is employed not only for transmission of computer data, instead of the conventional SCSI (small computer system interface) method, but also for transmission of AV data of sound and video, because in the IEEE1394 system, two communication methods, including the asynchronous communication and the isochronous communication, are defined. The isochronous communication is the data transmission method capable of transmitting data having the real-time requirement, such as AV data. In the isochronous communication, a band necessary to transmit data is acquired, prior to start of transmission. And data is transmitted through the band. Thereby, the real-time requirement of data transmission is assured. On the other hand, the asynchronous communication is the transmission method of transmitting data without the real-time requirement, such as computer data, or making equipment control. In the following, it is supposed that the asynchronous communication is employed to transmit or receive the commands for use with the equipment control in the invention. For a transmission protocol in the IEEE1394, various methods have been proposed. One of the methods is what is called an AV protocol. The AV protocol is standardized as IEC (International Electrotechnical Commission) 61883, in which a method for transmitting or receiving AV data having the real-time requirement through the isochronous communication, and a method for transmitting or receiving a command given to the equipment through the asynchronous communication are defined.

By the way, in the IEC-61883 standard, a concept referred to as an output plug or input plug is employed to deal with the input or output of the AV data in an AV reproducing apparatus or a recording and reproducing apparatus such as a compact disk (hereinafter referred to as CD) or a mini disk (hereinafter referred to as MD). The plug is an imaginary splicing terminal between each AV apparatus to be useful in transmitting or receiving data through the isochronous communication. A hybrid apparatus having integrally a plurality of functions may have the plug for each functional unit. For example, a CD radio cassette player has a'compound of functional units of a CD player, a tuner (radio), and a cassette tape player. Such apparatuses may have the plug for each functional unit for use to input or output the isochronous communication data. Two plugs belong to the functional unit, including a destination plug for accepting data from the outside and a source plug for transmitting data to the outside. These plugs have their attributes and operation states. However, in the AV protocol, no method for dealing with the information regarding these plugs is provided. A method for holding the information in the list structure and a method for accessing the list from the outside are defined as AV/C DISC Subunit General Specification (version 1.0 January 26, 1999) standard and its extension, or AV/C DISC Subunit Enhancements for Hard Disk Drive Specification standard in the IEEE1394 trade association (hereinafter referred to as TA). In these standards, the media identification information for a replaceable disk device such as a CD player or an MD player in which media is replaceable, and the information indicating a disk insertion state are defined as a list structure.

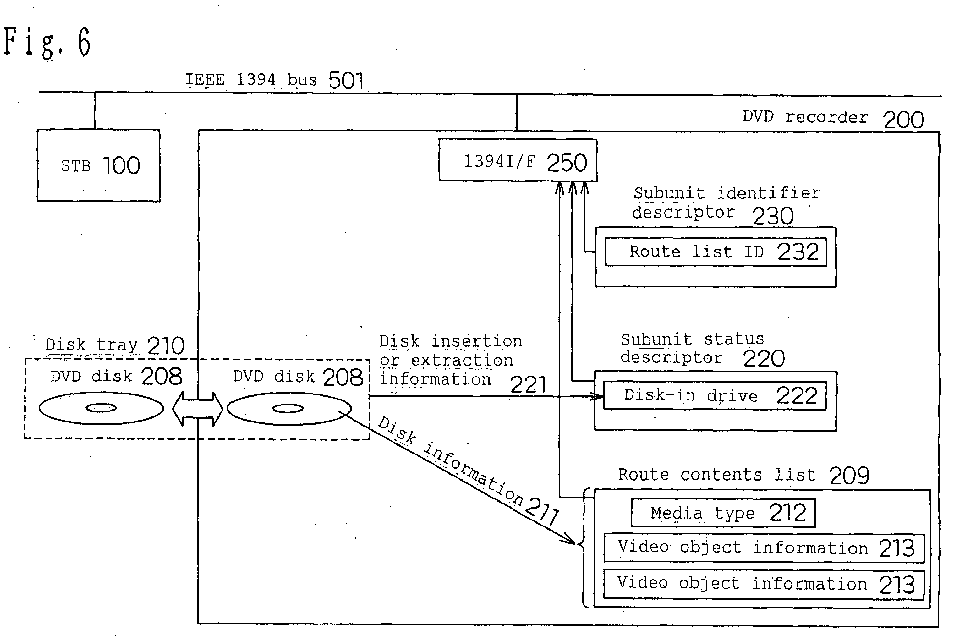

Figure 6 is a block diagram showing the operation of a conventional replaceable disk recording and reproducing apparatus and controller (e.g., refer to National Publication of International PatentApplication No. 2001-512274). The entire disclosure of National Publication of International Patent Application No. 2001-512274 is incorporated herein by reference in its entirety. An STB (Set Top Box) 100 and a DVD recorder 200 are connected via an IEEE1394 bus 501. A disk tray 210 is used to insert or extract a disk into or from the DVD recorder 200. Each of a subunit status descriptor 220, a route contents list 209 and a subunit identifier descriptor 230 is the descriptor having the list structure of information that can be read using the asynchronous packet via the IEEE1394 bus 501 from the DVD recorder 200. A disk-in drive 222 is the information indicating whether some kind of disk is inserted into the disk tray of the DVD recorder 200, and updated one after another by the DVD recorder 200, based on the disk insertion or extraction information obtained from the disk tray 210. A correspondence table between the disk insertion or extraction state and the value taken by the disk-in drive 222 is shown in Table 1.

**(Table 1)**

| Disk insertion or extraction state | Disk-in drive value |
|---|---|
| Unknown | 00b |
| Disk present | 01b |
| No disk | 10b |

The STB 100 periodically reads the disk-in drive 222 from the DVD recorder 200 using the asynchronous packet to detect replacement of a disk on the DVD recorder 200.

A media type 212 is the information reflecting the kind of media inserted into the DVD recorder 200, or the kind of signal format, which is updated one after another by the DVD recorder 200, based on the disk information 211 obtained by discriminating the kind of disk inserted into the disk tray 210 in the DVD recorder. The video object information 213 stores individual information of contents recorded on the DVD disk 208. The STB 100. can read such information from the DVD recorder 200, using the asynchronous packet. A route list ID 232 is the list ID for designating the route contents list 209. The STB 100 issues a read command of asynchronous packet by designating the route list ID 232 to read the route contents list 209.

Herein, in the case where the DVD recorder 200 has the reproduction capability of not only DVD-Video, but also CD and other kinds of disk, the DVD recorder 200 examines the disk when it is inserted, and reflects the kind of disk to the media type 212. A correspondence table between the kind of inserted disk and the value taken by the media type 212 is shown in Table 2.

**(Table 2)**

| Kind of disk | Media type value | Route contents list ID |
|---|---|---|
| CD-DA | 0101h | 1000h |
| MD-Audio | 0301h | 1000h |
| DVD-Video | 0902h | 1000h |
| GRVD | 0D01h | 3000h |
| Unknown | FFFFh | ― |

The rules of a set of commands or descriptors for use when the STB 100 controls the DVD recorder 200 are determined by the kind of media inserted into the DVD recorder 200. More specifically, when a DVD-Video disk is inserted into the DVD recorder 200, the STB 100 controls the DVD recorder 200 in accordance with the AV/C Disc Media Type Specification-DVD (TA Candidate 1.0: 63 April 23, 2001) in the 1394TA standard. Also, when a CD disk is inserted into the DVD recorder 200, the STB 100 controls the DVD recorder 200 in accordance with the AV/C Disc Media Type Specification - CD-DA (version 1.0 FC 2 April 9, 1999) in the 1394TA standard.

That is, for the STB 100 to control the DVD recorder 200, it is required to know the kind of disk inserted into the DVD recorder 200, and to detect replacement of the disk in the DVD recorder 200, and reexamine the kind of newly inserted disk, if the replacement of the disk is made.

Referring to Figure 6, a specific control procedure for the STB 100 controlling the DVD recorder 200 will be briefly described below.

In controlling the DVD recorder 200, the STB 100 firstly reads the subunit status descriptor 220 using the asynchronous packet, and takes out the value of the disk-in drive 222 included therein. If the taken-out value is 01b, some kind of disk is kept inserted into the DVD recorder 200. Then, the STB 100 examines the kind of disk inserted into the DVD recorder 200. That is, the subunit identifier descriptor 230 is read from the DVD recorder, using the asynchronous packet, and the route list ID included therein is taken out. Based on the list ID taken out, a read command of the route contents list 209 is issued to the DVD recorder 200. The STB 100 takes out the value of the media type 212 included in the read route contents list 209. When the taken-outvalue is 0101h, the CD-DA is kept inserted into the DVD recorder 200. Or when the taken-out value is 0902h, the DVD-Video is kept inserted into the DVD recorder 200. When the kind of inserted media is known, the STB 100 can control the DVD recorder 200, based on the control standard (1394TA standard) corresponding to the kind of respective media.

The above disk recognition process is performed every time of disk replacement. That is, the STB 100 reads periodically the value of the disk-in drive 222, and the replacement of disk in the DVD recorder 200 is recognized when the value is changed to other than 01b and then restored to 01b. If a disk is replaced, the kind of newly inserted disk must be examined again to control the DVD recorder 200. Therefore, the STB 100 needs to perform the disk recognition process, every time the replacement of the disk is detected.

Also, after a disk is replaced, and the above disk recognition process is performed, the STB 100 once stores the route list ID 232 obtained in the disk recognition process, and makes a read request of the route contents list 209 by designating the stored route list ID until the disk is replaced at the next time. That is, the route list ID 232 is acquired from the DVD recorder 200, only when the disk is replaced, and the above disk recognition process is performed. At the other time, the STB 100 reads the route contents list 209, using the route list ID 232 stored when the disk recognition process is performed.

Herein, a supplemental explanation for the descriptor reading procedure will be given below. The STB 100 needs to acquire a read right of a descriptor from the DVD recorder 200 and read the descriptor in accordance with the Disc General standard. A state in which the read right for a certain descriptor is acquired is called an open state, or a state in which the read right is not acquired, the once acquired read right is returned, or the once acquired read right is restored by the DVD recorder 200 is called a closed state. When the STB 100 issues a read command for a descriptor in the closed state, the DVD recorder 200 returns a negative response to this command. The STB 100 receiving the negative response needs to send again a request for reopening the descriptor to the DVD recorder 200, and have the request accepted to read the descriptor.

In the conventional DVD recorder 200, when the kind of disk is changed by reformatting the disk in a state where the disk is kept inserted, the value of the disk-in drive is unchanged from 01b, whereby a change in the kind of disk is not detected from the outside.

That is, since the conventional external control device such as the STB 100 does not perform the above disk recognition process while the disk is kept inserted, the route list ID 232 held by the control device is unchanged from the route list ID 232 before formatting. Accordingly, the control device tries to refer to the route contents list 209 , using the route list ID 232 before formatting, even if the kind of the disk is changed by formatting. Therefore, the control device can not refer to the route contents list 209 after formatting.

In this manner, the control device does not know that the kind of the disk is changed, and can not make the control in accordance with the standard (1394TA standard) corresponding to the kind of the new disk. That is, there is a problem that the control cannot be continued.

### Disclosure of the Invention

In the light of the above-mentioned problems, it is an object of the invention to provide a disk information output method, a replaceable disk recording and reproducing apparatus, a control device, a program and a recording medium, in which even when the kind of disk inserted into a replaceable disk recording and reproducing apparatus such as DVD recorder 200 is changed by formatting the disk, the control device can continue the control by detecting the kind of disk correctly.

In order to achieve the above obj ect, a first invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, the method comprising,
an output step of outputting to the control device the information indicating that reading the disk information is impossible or the information indicating that a read request is refused when the replaceable disk recording and reproducing apparatus receives the read request of the disk information from the control device having a read right of the descriptor during initialization of the replaceable disk, and
an acquisition step of acquiring the descriptor identifier from the replaceable disk recording and reproducing apparatus, when the control device requests again the read right of the descriptor firstly after the replaceable disk recording and reproducing apparatus outputs to the control device the information indicating that reading the disk information is impossible or the information indicating that the read request is refused.

Also, a second invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, the method comprising,
an output step of disabling a read right of the descriptor to be given to the control device when the replaceable disk recording and reproducing apparatus receives a request for the read right of the descriptor from the control device during initialization of the replaceable disk, and
an acquisition step of acquiring the descriptor identifier from the replaceable disk recording and reproducing apparatus, when the control device requests again the read right of the descriptor firstly after the replaceable disk recording and reproducing apparatus disables the read right of the descriptor to be given to the control device.

Also, a third invention of the present invention is a disk information output method for making access to the disk information based on a descriptor identifier acquired from a replaceable disk recording and reproducing apparatus and stored by a control device, said descriptor identifier identifying a descriptor having the disk information of a replaceable disk in said replaceable disk recording and reproducing apparatus, said method comprising:
an output step of outputting to said control device the information indicating that reading said disk information is impossible or the information indicating that a read request is refused when said replaceable disk recording and reproducing apparatus receives said read request of said disk information from said control device having a read right of said descriptor and during initialization of said replaceable disk;
wherein when said control device requests again the read right of said descriptor firstly after said replaceable disk recording and reproducing apparatus outputs to said control device the information indicating that reading said disk information is impossible or the information indicating that said read request is refused, said descriptor identifier is acquired from said replaceable disk recording and reproducing apparatus by said control device.

Also, a fourth invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, the method comprising,
an output step of disabling a read right of the descriptor to be given to the control device when the replaceable disk recording and reproducing apparatus receives a request for the read right of the descriptor from the control device during initialization of the replaceable disk,
wherein the descriptor identifier is acquired from the replaceable disk recording and reproducing apparatus by the control device, when the control device requests again the read right of the descriptor firstly after the replaceable disk recording and reproducing apparatus disables the read right of the descriptor to be given to the control device.

Also, a fifth invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, in which when the replaceable disk is taken in or out, the control device acquires the descriptor identifier again, the method comprising an output step of outputting to the control device the information indicating a state where the replaceable disk is not inserted, or a state where insertion or extraction of the replaceable disk is unknown, when the replaceable disk recording and reproducing apparatus receives a read request of the disk insertion or extraction information from the control device during initialization of the replaceable disk.

Also, a sixth invention of the present invention is the disk information output method according to any one of the third to the fifth inventions of the present invention, wherein said control device requests said replaceable disk recording and reproducing apparatus to acquire the disk insertion or extraction information upon polling.

Also, a seventh invention of the present invention is the disk information output method according to the third or the fourth invention of the present invention, wherein said disk information has the disk identification information representing the kind of said replaceable disk and a recording format, and said control device detects a change in the kind of replaceable disk or the recording format in the said replaceable disk recording and reproducing apparatus, based on a comparison result between the disk identification information obtained by said control device acquiring the read right of said disk information and the disk identification information obtained by said control device acquiring the read right of said disk information at the previous time.

Also, an eighth invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, the method comprising an acquisition step of acquiring the descriptor identifier from the replaceable disk recording and reproducing apparatus, when the control device requests again a read right of the descriptor firstly after the replaceable disk recording and reproducing apparatus outputs to the control device the information indicating that reading the disk information is impossible or the information indicating that the read request is refused, if the replaceable disk recording and reproducing apparatus receives a read request of the disk information from the control device having the read right of the descriptor during initialization of the replaceable disk.

Also, a ninth invention of the present invention is a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, the method comprising,
an acquisition step of acquiring the descriptor identifier from the replaceable disk recording and reproducing apparatus, when the control device requests again a read right of the descriptor firstly after the replaceable disk recording and reproducing apparatus disables the read right of the descriptor to be given to the control device, if the replaceable disk recording and reproducing apparatus receives a request for the read right of the descriptor from the control device during initialization of the replaceable disk.

Also, a tenth invention of the present invention is the disk information output method according to the eighth or the ninth invention of the present invention, wherein the control device comprises a request step of requesting the replaceable disk recording and reproducing apparatus to acquire the disk insertion or extraction information upon polling.

Also, an eleventh invention of the present invention is the disk information output method according to the eighth or the ninth invention of the present invention, wherein the disk information has the disk identification information representing the kind of the replaceable disk or a recording format, and the method further comprises a detection step of the control device for detecting a change in the kind of replaceable disk or the recording format in the replaceable disk recording and reproducing apparatus, based on a comparison result between the disk identification information obtainedby the control device acquiring the read right of the disk information and the disk identification information obtained by the control device acquiring the read right of the disk information at the previous time.

Also, a twelfth invention of the present invention is a replaceable disk recording and reproducing apparatus for use with a disk information output method for making access to the disk information based on a descriptor identifier acquired from the replaceable disk recording and reproducing apparatus and stored by a control device, the descriptor identifier identifying a descriptor having the disk information of a replaceable disk in the replaceable disk recording and reproducing apparatus, the apparatus comprising,
writing means of initializing at least the replaceable disk, and
output means of outputting to the control device the information indicating that reading the disk information is impossible or the information indicating that a read request is refused when the writing means receives the read request of the disk information from the control device having a read right of the descriptor during initialization of the replaceable disk,
wherein the control device comprises request means for acquiring the descriptor identifier from the output means, when the control device requests again the read right of the descriptor firstly after the output means outputs to the control device the information indicating that reading the disk information is impossible or the information indicating that the read request is refused.

Also, a thirteenth invention of the present invention is a replaceable disk recording and reproducing apparatus for use with a disk information output method for making access to the disk information based on a descriptor identifier acquired from the replaceable disk recording and reproducing apparatus and stored by a control device, the descriptor identifier identifying a descriptor having the disk information of a replaceable disk in the replaceable disk recording and reproducing apparatus, the apparatus comprising,
writing means of initializing at least the replaceable disk, and
output means of disabling a read right of the descriptor to be given to the control device when the writing means receives a read request of the descriptor from the control device during initialization of the replaceable disk,
wherein the control device comprises request means for acquiring the descriptor identifier from the replaceable disk recording and reproducing apparatus, when the control device requests again the read right of the descriptor firstly after the output means disables the read right of the descriptor to be given to the control device.

Also, a fourteenth invention of the present invention is a replaceable disk recording and reproducing apparatus for use with a disk information output method for making access to the disk information based on a descriptor identifier acquired from a replaceable disk recording and reproducing apparatus and stored by a control device, the descriptor identifier identifying a descriptor having the disk information of a replaceable disk in the replaceable disk recording and reproducing apparatus, in which when the replaceable disk is taken in or out, the control device acquires the descriptor identifier again, the apparatus comprising:
writing means of initializing at least the replaceable disk, and
output means of outputting to the control device the information indicating a state where the replaceable disk is not inserted, or a state where insertion or extraction of the replaceable disk is unknown, when the writing means receives a read request of the disk insertion or extraction information from the control device during initialization of the replaceable disk.

Also, a fifteenth invention of the present invention is the replaceable disk recording and reproducing apparatus according to any one of the twelfth to the fourteenth inventions of the present invention, wherein the control device comprises a request step of requesting the output means to acquire the disk insertion or extraction information upon polling.

Also, a sixteenth invention of the present invention is the replaceable disk recording and reproducing apparatus according to the twelfth or the thirteenth invention of the present invention, wherein the disk information has the disk identification information representing the kind of the replaceable disk or a recording format, and the control device further comprises a detection step of detecting a change in the kind of replaceable disk or the recording format in the replaceable disk recording and reproducing apparatus, based on a comparison result between the disk identification information obtainedby the control device acquiring the read right of the disk information and the disk identification information obtained by the control device acquiring the read right of the disk information at the previous time.

Also, a seventeenth invention of the present invention is a control device for use with a disk information output method for making access to the disk information based on a descriptor identifier acquired from the replaceable disk recording and reproducing apparatus and stored by the control device, the descriptor identifier identifying a descriptor having the disk information of a replaceable disk in the replaceable disk recording and reproducing apparatus, the apparatus comprising,
writing means of initializing at least the replaceable disk, and
output means of outputting to the control device the information indicating that reading the disk information is impossible or the information indicating that a read request is refused when the writing means receives the read request of the disk information from the control device having a read right of the descriptor during initialization of the replaceable disk,
wherein the control device comprises request means of acquiring the descriptor identifier from the output means, when the control device requests again the read right of the descriptor firstly after the output means outputs to the control device the information indicating that reading the disk information is impossible or the information indicating that the read request is refused.

Also, an eighteenth invention of the present invention is a control device for use with a disk information output method for making access to the disk information based on a descriptor identifier acquired from the replaceable disk recording and reproducing apparatus and stored by a control device, the descriptor identifier identifying a descriptor having the disk information of a replaceable disk in the replaceable disk recording and reproducing apparatus, the apparatus comprising,
writing means of initializing at least the replaceable disk, and
output means for disabling a read right of the descriptor to be given to the control device when the writing means receives a read request of the descriptor from the control device during initialization of the replaceable disk,
wherein the control device comprises request means of acquiring the descriptor identifier from the output means, when the control device requests again the read right of the descriptor firstly after the output means disables the read right of the descriptor to be given to the control device.

Also, a nineteenth invention of the present invention is the control device according to the seventeenth or the eighteenth invention of the present invention, wherein the request means requests the replaceable disk recording and reproducing apparatus to acquire the disk insertion or extraction information upon polling.

Also, a twentieth invention of the present invention is the control device according to the seventeenth or the eighteenth invention of the present invention, wherein the disk information has the disk identification information representing the kind of the replaceable disk or a recording format, and the control device further comprises a detection step of detecting a change in the kind of replaceable disk or the recording format in the replaceable disk recording and reproducing apparatus, based on a comparison result between the disk identification information obtainedby the control device acquiring the read right of the disk information and the disk identification information obtained by the control device acquiring the read right of the disk information at the previous time.

Also, a twenty-first invention of the present invention is a program for causing a computer to perform an output step of outputting to said control device the information indicating that reading said disk information is impossible or the information indicating that said read request is refused when said replaceable disk recording and reproducing apparatus receives a read request of said disk information from said control device having the read right of said descriptor during initialization of said replaceable disk, of said disk information output method according to the third invention of the present invention.

Also, a twenty-second invention of the present invention is a program for causing a computer to perform an output step of disabling the read right of the descriptor to be given to the control device, when the replaceable disk recording and reproducing apparatus receives a request for the read right of the descriptor from the control device during initialization of the replaceable disk, of said disk information output method according to the fourth invention of the present invention.

Also, the twenty-third invention of the present invention is a program for causing a computer to perform an output step of outputting to the control device the information indicating a state where the replaceable disk is not inserted, or a state where insertion or extraction of the replaceable disk is unknown, when the replaceable disk recording and reproducing apparatus receives a read request of the disk insertion or extraction information from the control device during initialization of the replaceable disk, of the disk information output method according to the fifth invention of the present invention.

Also, the twenty-fourth invention of the present invention is a program for causing a computer to perform an acquisition step of acquiring the descriptor identifier from the replaceable disk recording and reproducing apparatus, when the control device requests again the read right of the descriptor firstly after the replaceable disk recording and reproducing apparatus outputs to the control device the information indicating that reading the disk information is impossible or the information indicating that the read request is refused, if the replaceable disk recording and reproducing apparatus receives a read request of the disk information from the control device having the read right of the descriptor during initialization of the replaceable disk, of the disk information output method according to the eighth invention of the present invention.

Also, the twenty-fifth invention of the present invention is a program for causing a computer to perform an acquisition step of acquiring the descriptor identifier from the replaceable disk recording and reproducing apparatus, when the control device requests again the read right of the descriptor firstly after the replaceable disk recording and reproducing apparatus disables the read right of the descriptor to be given to the control device, if the replaceable disk recording and reproducing apparatus receives a request for the read right of the descriptor from the control device during initialization of the replaceable disk, of the disk information output method according to the ninth invention of the present invention.

Also, a twenty-sixth invention of the present invention is a recording medium carrying the program according to any one of the twenty-first to the twenty-fifth inventions of the present invention, wherein said recording medium can be processed by a computer.

### Brief Description of the Drawings

Figure 1 is a block diagram showing a DVD recorder and an STB according to the embodiments 1 and 2 of the present invention;
Figure 2 (a) is a flowchart showing the operation of detecting the insertion of a disk in the DVD recorder according to the embodiments 1 and 2 of the invention;
Figure 2 (b) is a flowchart showing the operation of detecting the ejection of a disk in the DVD recorder according to the embodiments 1 and 2 of the invention;
Figure 2 (c) is a flowchart showing the operation of detecting the completion of formatting in the DVD recorder according to the embodiments 1 and 2 of the invention;
Figure 2 (d) is a flowchart showing the operation of detecting the start of formatting in the DVD recorder according to the embodiments 1 and 2 of the invention;
Figure 3(e) is a flowchart showing the operation of receiving a route contents list reading request in the DVD recorder according to the embodiments 1 and 2 of the invention;
Figure 3 (f) is a flowchart showing the operation of receiving a route contents list opening request in the DVD recorder according to the embodiments 1 and 2 of the invention;
Figure 4 (a) is a flowchart showing the operation in which an initial state of disk-in drive is "the presence of a disk" in the STB according to the embodiments 1 and 2 of the invention;
Figure 4(b) is a flowchart showing the operation in which an initial state of disk-in drive is "the absence of a disk" or unknown in the STB according to the embodiments 1 and 2 of the invention;
Figure 5 (c) is a flowchart showing the operation of detecting the insertion of a disk in the STB according to the embodiments 1 and 2 of the invention;
Figure 5 (d) is a flowchart showing the operation of a case where the route contents list is reopened after compulsorily closing in the STB according to the embodiments 1 and 2 of the invention; and
Figure 6 is a block diagram of a conventional replaceable disk recording and reproducing apparatus.

### (Explanation of reference numerals)

- 100: STB (Set Top Box)
- 200: DVD recorder
- 208: DVD disk
- 209: Route contents list
- 210: Disk tray
- 211: Disk information
- 212: Media type
- 213: Video object information
- 220: Subunit status descriptor
- 221: Disk insertion or extraction information
- 222: Disk-in drive
- 230: Subunit identifier descriptor
- 232: Route list ID
- 250: 13941/F
- 251: Formatted state
- 252: Disk writing portion
- 253: Formatting instruction
- 254: Remote control receiving part
- 501: IEEE1394 bus

### Best Mode for Carrying Out the Invention

The preferred embodiments of the present invention will be described below with reference to the accompanying drawings.

### (Embodiment 1)

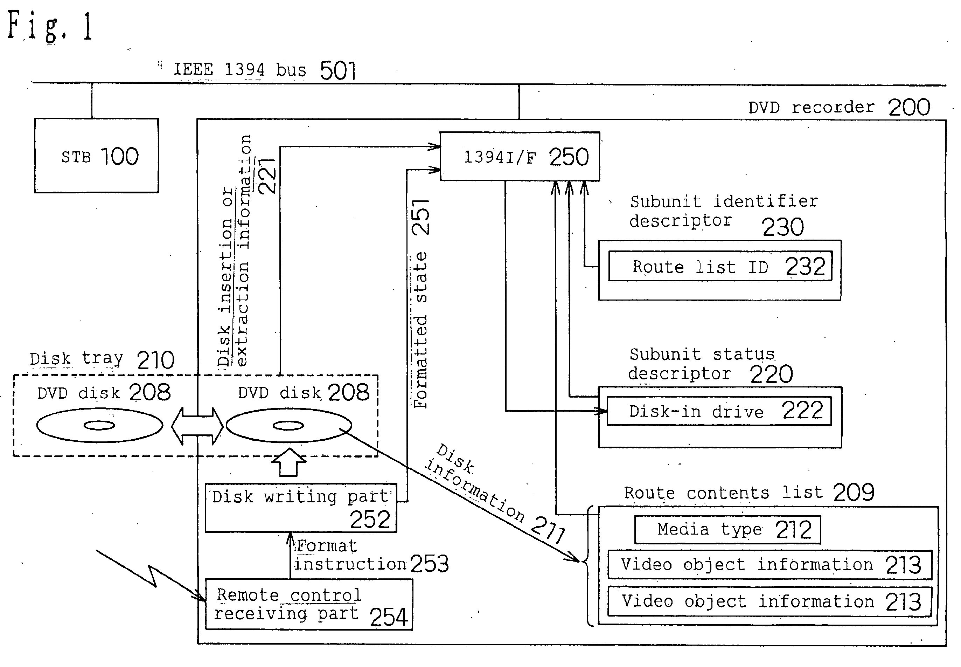

Figure 1 shows the configuration of embodiment 1. In Figure 1, the same or like parts as in Figure 6 are designated by the same numerals, and not described here. The 1394I/F250 receives various kinds of command via an IEEE1394 bus 501, and returns a response. A disk writing part 252 writes information into the disk. Asignal remote control receiving part 254 accepts a remote control signal from the outside, and issues an operation instruction to the necessary part. When the remote control signal from the outside is a format instruction of the disk, the remote control receiving part 254 issues a format instruction 253 to the disk writing part 252. Upon receiving the format instruction 253, the disk writing part 252 formats the disk inserted into the DVD recorder 200. A format status 251 indicates whether the disk is being formatted at present, using a status signal output from the disk writing part 252.

In the following, a control procedure of the STB 100 will be described in the case where the DVD recorder 200 formats the DVD-RW disk having a signal recorded in DVD-Video format.

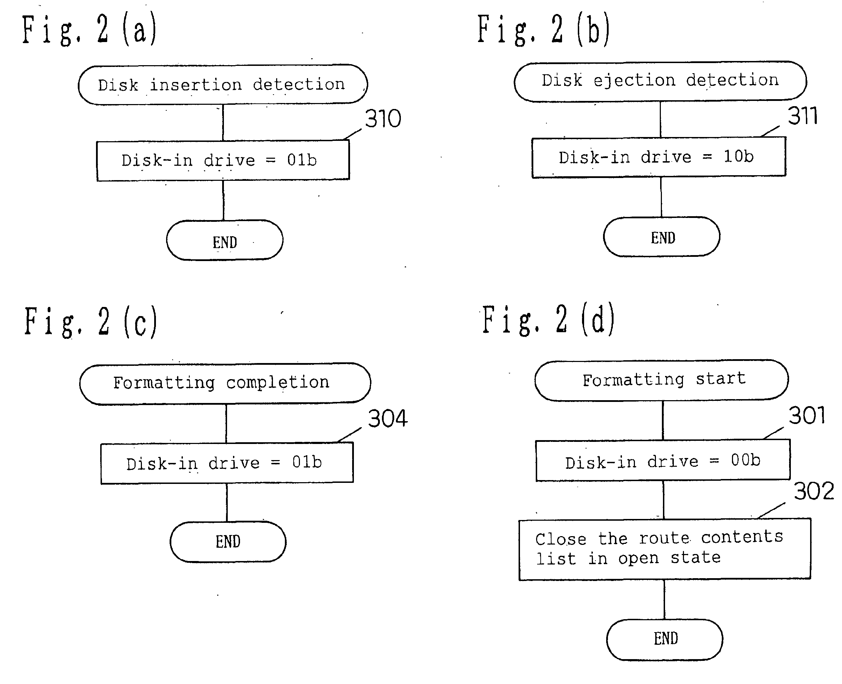

Figures 2(a), 2(b), 2(c) and 2(d) are flowcharts showing the operation when the 1394 I/F 250 writes into the disk-in drive 222 included in the subunit status descriptor 220 of the DVD recorder 200. The 1394 I/F 250 monitors the disk insertion or extraction information 221. Upon detecting insertion of the disk, the 1394 I/F 250 writes the value 01b into the disk-in drive 222 at step 310 in Figure 2(a). Upon detecting ejection of the disk, the 1394 I/F 250 writes the value 10b into the disk-in drive 222 at step 311 in Figure 2B. Also, the 1394 I/F 250 monitors the format status 251. Upon detecting the start of formatting the disk, the 1394 I/F 250 closes the route contents list 209, which is in open state at that time, at step 302 in Figure 2D. In this manner, the 1394 I/F 250 closes the route contents list 209, which is in open state at that time, at the timing when the formatting of the disk is started. Upon detecting the start of formatting the disk, step 301 is not made in the embodiment 1, but step 302 is only made. Step 301 is only performed in the embodiment 2 as hereinafter described. Also, the operation of Figure 2C is not performed in the embodiment 1. The operation of Figure 2C is only performed in the embodiment 2.

In this manner, in the embodiment 1, the value written into the disk-in drive 222 always conforms to the disk insertion or extraction information 221. That is, in the embodiment 2, the status contradictory to the disk insertion or extraction information 221 is written into the disk-in drive 222, while the disk is being formatted in accordance with the format status 251. However, in the embodiment 1, unlike the embodiment 2, the value corresponding to the disk insertion or extraction information 221 is always written into the disk-in drive 222.

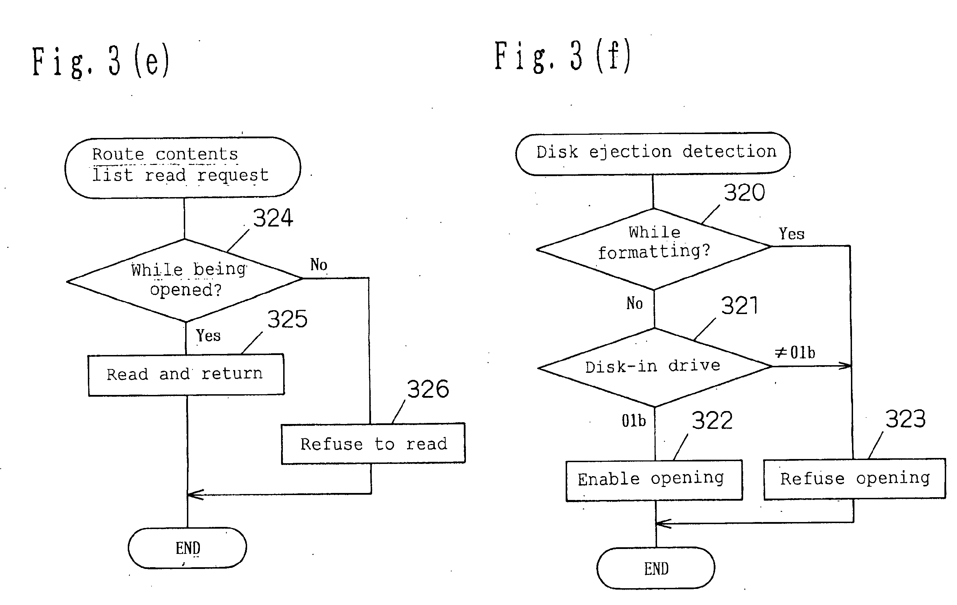

Figure 3 (f) is a flowchart showing the operation of the 1394 I/F 250 when receiving an open request of the route contents list 209 from the STB 100. Upon receiving the open request from the route contents list 209, the 1394 I/F 250 judges whether or not the disk is being formatted at step 320. If the disk is being formatted, a negative response to the open request is returned at step 323. When the disk is not being formatted, the value of the disk-in drive 222 is examined at step 321, in which if this value is other than 01b, a negative response to the open request is returned step 323, or if the value is 01b, an affirmative response to the open request is returned at step 322.

Figure 3 (e) is a flowchart showing the operation of the 1394 I/F 250 when receiving a read request of the route contents list 209 from the STB 100. Upon receiving the read request of the route contents list 209, the 1394 I/F 250 judges whether or not the route contents list 209 is being opened at step 324. If the route contents list 209 is being opened, a read response is created and returned to the STB 100 at step 325. When the route contents list 209 is not being opened, a negative response to the read request is returned at step 326.

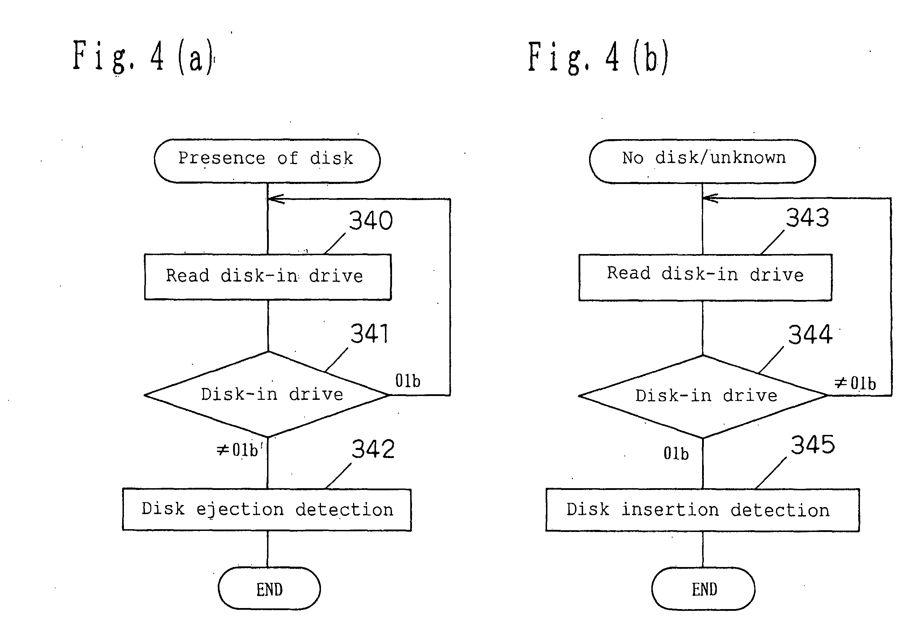

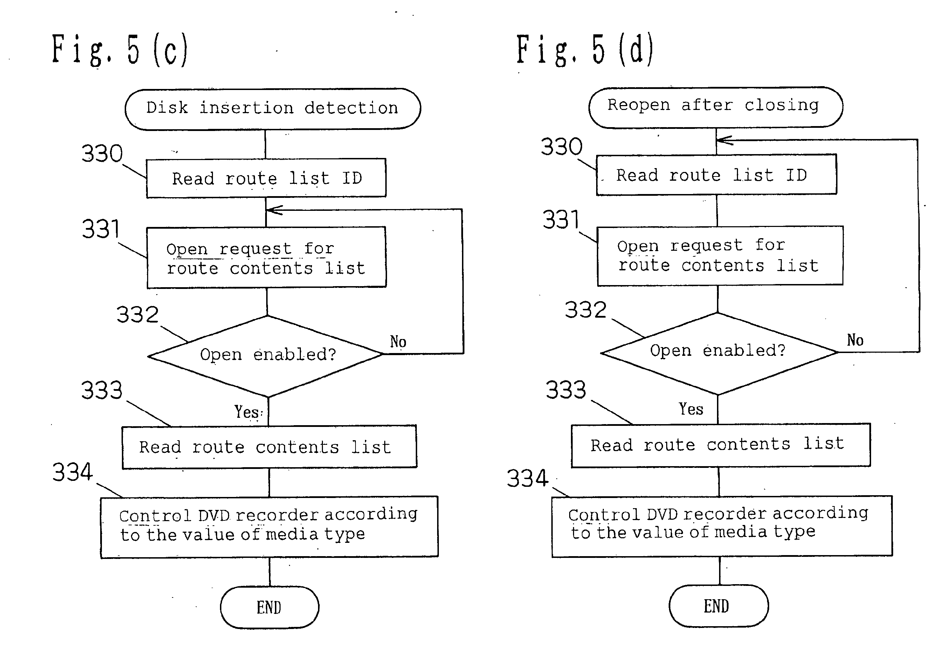

Figures 4(a), 4(b) and Figures 5(c), 5(d) are flowcharts showing the operation of the STB 100 monitoring the disk insertion or extraction state of the DVD recorder 200. First of all, the STB 100 reads the disk-in drive 222 from the DVD recorder 200, and acquires the initial information in a disk insertion or extraction state (not shown). If the initial state is "the presence of a disk", the disk-in drive is read at step 340 and it is repeatedly judged at step 341 in Figure 4 (a) whether or not the value of disk-in drive is changed. If the value of disk-in drive is changed, it is judged at step 342 that the disk is ejected. If the initial state is "the absence of a disk or unknown", the disk-in drive is read at step 343 and it is repeatedly judged at step 344 in Figure 4 (b) whether or not the value of disk-in drive is changed to 01b. If the value of disk-in drive is changed to 01b, it is judged at step 345 that the disk is inserted. If the insertion of the disk is detected, the subunit identifier descriptor 230 of the DVD recorder is read and the route list ID 232 included in it is acquired at step 330 in Figure 5 (c). Then, the STB 100 sends an open request for the route contents list to the DVD recorder 200 at step 331 by designating the acquired route list ID. If the open request is refused at step 332, steps 331 and 332 are repeated until the open is successful. If the open is successful, a read request for the contents of the route contents list 209 is sent and the contents of the route contents list 209 returned from the DVD recorder 200 are acquired at step 333. Then, at step 334, the media type 212 included in the acquired route contents list 209 is taken out to identify the kind of media inserted into the DVD recorder 200, and the DVD recorder 200 starts to be controlled in accordance with the standard (1394TA standard) corresponding to the kind of media.

Figure 5 (d) is a flowchart showing the operation of reopening after the route contents list 209 opened by the STB 100 is compulsorily closed by the DVD recorder 200 (step 302). Figure 5 (d) is different from Figure 5 (c) only in that a branch point when the open is refused at step 332 is before step 330. That is, in the case where the STB 100 reopens the route contents list 209 after the route contents list 209 opened by the STB 100 is compulsorily closed by the DVD recorder 200 (step 302), the route list ID 232 is first of all read and an open request for the route contents list 209 is made.

That is, in the case where the STB 100 reopens the route contents list 209 after the route contents list 209 opened by the STB 100 is compulsorily closed by the DVD recorder 200 (step 302), the subunit identifier descriptor 230 of the DVD recorder is read at step 330 in figure 5(d) and the route list ID 232 included in it is acquired. Then, the STB 100 sends an open request for the route contents list to the DVD recorder 200 at step 331 by designating the acquired route list ID. If the open is refused at step 332, steps 330, 331 and 332 are repeated until the open is successful. In this manner, when the STB 100 firstly requests a read right for the route contents list 209 again, or when it opens the route contents list 209, after the open is refused, the route list ID 232 is acquired from the DVD recorder 200. When the open is successful, a read request for the contents of the route contents list 209 is sent at step 333 to acquire the contents of the route contents list 209 returned by the DVD recorder 200. Then, at step 334, the media type 212 included in the acquired route contents list 209 is taken out to identify the kind of media inserted into the DVD recorder 200, and the DVD recorder 200 starts to be controlled in accordance with the standard (1394TA standard) corresponding to the kind of media.

Now, suppose that the kind of disk inserted into the DVD recorder 200 is the DVD-RW disk in a finalized DVD-Video format. In this case, the STB 100 judges that the media type 212 is DVD-Video at step 334, and starts to make the control in accordance with the 1394TA standard of the DVD-Video. Suppose that the user instructs the DVD recorder 200 to format the disk, using the remote controller (not shown), after starting to make the control. An instruction of the remote controller is received by the remote control receiving part 254, and a format instruction 253 is issued from the remote control receiving part 254 to the disk writing part 252. The disk writing part 252 that received the format instruction 253 formats the DVD-RW disk inserted into the DVD recorder 200. The formatted DVD-RW disk is changed again to the writable state, unlike the finalized state before formatting. The DVD-RW in the writable state is treated in accordance with the GRVD standard (1394TA standard: AV/C Disc Subunit - Generic Recordable Video Disc Media Type Specification 1.0 AVWG Candidate 1.0: 10 February 5, 2002) in the DVD recorder 200, whereby the disk information 211 is changed to GRVD after formatting, and the information written in the media type 212 is also changed from DVD-Video to GRVD.

At the time when the formatting is started in the DVD recorder 200, the route contents list 209 is compulsorily closed at step 302 in Figure 2D. The STB 100 sends a read request for reading the route contents list 209 to the DVD recorder 200, and knows the closed state if the read request is refused by the DVD recorder 200. The STB 100 knowing the closed state repeatedly tries to reopen the route contents list 290 in Figure 5D, but the open request is refused at step 320 while the format operating is performed in the DVD recorder 200. When the format operation is completed, the open request of the STB 100 is accepted at step 320, and the route contents list 209 is read at step 333. The STB 100 knows that the value of the media type 212 included in the route contents list 209 is GRVD, and starts to control the DVD recorder 200 in accordance with the GRVD standard at step 334 and its following steps.

In this manner, upon receiving a read request for the information stored in the route contents list 209 from the STB 100 having the read right of the route contents list 209 duringthe formatting of the disk, the DVD recorder 200 outputs the information indicating that reading the information stored in the route contents list 209 is impossible or the information refusing the read request to the STB 100. And when the STB 100 newly requests the read right for the descriptor firstly after the DVD recorder 200 outputs the information indicating that reading the information stored in the route contents list 209 is impossible or the information refusing the read request to the STB 100, the route list ID 232 is acquired from the DVD recorder 200. In this manner, even if the DVD recorder 200 formats the disk to change the kind of disk, the disk can be controlled continuously.

Also, if the DVD recorder 200 receives a request for the read right of the route contents list 209 from the STB 100 during the formatting of the disk, the read right of the route contents list 209 is not given to the STB 100. And the STB 100 newly requests the read right of the descriptor firstly after the DVD recorder 200 does not give the read right of the route contents list 209 to the STB 100, the route list ID 232 is acquired from the DVD recorder 200. In this manner, even if the DVD recorder 200 formats the disk to change the kind of disk, the disk can be controlled continuously.

The DVD disk 208 or the disk of this embodiment is an example of the replaceable disk of the invention, the route contents list 209 of this embodiment is an example of the descriptor, the route list ID 232 of this embodiment is an example of the descriptor identifier of the invention, the disk writing part 252 of this embodiment is an example of writing means of the invention, the 1394 I/F 250 of this embodiment is an example of output means of the invention, the STB 100 of this embodiment is an example of request means of the invention, the DVD recorder 200 of this embodiment is an example of the replaceable disk recording and reproducing apparatus of the invention, and the STB 100 of this embodiment is an example of the control device of the invention.

### (Embodiment 2)

Figure 1 shows the configuration of an embodiment 2. The embodiment 2 will be mainly described below in terms of the different points from the embodiment 1.

In the following, a control procedure of the STB 100 will be described in the case where the DVD recorder 200 formats the DVD-RW disk having a signal recorded in DVD-Video format.

The operations in Figures 2 (a), 2 (b) and Figures 3 (e), 3(f) are the same as in the embodiment 1. Also, in the embodiment 2, all the operations in Figures 2 (c) and 2 (d) are performed, unlike the embodiment 1.

That is, the 1394 I/F 250 also monitors the format status 251. Upon detecting the start of formatting the disk, the 1394 I/F 250 writes the value 00b in the disk-in drive 222 at step 301 in Figure 2(d). Also, the 1394 I/F 250 closes the route contents list 209, which is in open state at that time, at step 302. The 1394 I/F 250 detecting that the formatting is completed write the value 01b in the disk-in drive 222 at step 304 in Figure 2(c).

The operations in Figures 4 (a), 4 (b) and Figure 5 (c) are the same as in the embodiment 1. Also, the operation in Figure 5(d) is not performed in the embodiment 2.

Now, suppose that the kind of disk inserted into the DVD recorder 200 is the DVD-RW disk in the finalized DVD-Video format. In this case, the STB 100 judges that the media type 212 is DVD-Video at step 334, and starts to make the control in accordance with the 1394TA standard of the DVD-Video. Suppose that the user instructs the DVD recorder 200 to format the disk, using the remote controller (not shown), after starting to make the control. An instruction of the remote controller is received by the remote control receiving part 254, and a format instruction 253 is issued from the remote control receiving part 254 to the disk writing part 252. The disk writing part 252 receiving the format instruction 253 formats the DVD-RW disk inserted into the DVD recorder 200. The formatted DVD-RW disk is changed again to the writable state, unlike the finalized state before formatting. The DVD-RW in the writable state is treated in accordance with the GRVD standard (1394TA standard: AV/C Disc Subunit - Generic Recordable Video Disc Media Type Specification 1.0 AVWG Candidate 1.0: 10 February 5, 2002) in the DVD recorder 200, whereby the disk information 211 is changed to GRVD after formatting, and the information written in the media type 212 is also changed from DVD-Video to GRVD.

At the time when the formatting is started in the DVD recorder 200, the value of the disk-in drive 222 is rewritten into 00b at step 301. The STB 100 detects the change in the disk-in drive 222 at step 341, and is kept waiting at steps 343 and 344 until the value of the disk-in drive 222 is changed again to 01b. When the value of the disk-in drive 222 is changed again to 01b, it is judged that the disk is detected at step 234, and the route contents list 209 is read through the procedure from step 330 to step 333. The STB 100 knows that the value of the media type 212 included in the route contents list 209 is GRVD, and starts to control the DVD recorder 200 in accordance with the GRVD standard at step 334 and its following steps.

In this embodiment 2, when the DVD recorder 200 starts formatting, the value of the disk-in drive 222 is rewritten into 00b at step 301. However, the invention is not limited thereto. When the DVD recorder 200 starts formatting, the value of the disk-in drive 222 may be rewritten into 10b at step 301. In this case, when the DVD recorder starts formatting, the disk is still kept inserted. However, if the value of the disk-in drive 222 is rewritten into 10b when the DVD recorder starts formatting, the STB 100 regards the disk as being once extracted from the DVD recorder 200. Thereafter, when the formatting is completed, the value of the disk-in drive 222 is restored to the value 01b again, whereby the STB 100 regards the new disk as being inserted and reads the route contents list 209 through the procedure from step 330 to step 333. Accordingly, when the formatting is started, the value of the disk-in drive 222 may be rewritten into 10b at step 301 to achieve the same effect of this embodiment 2.

In this manner, upon receiving a read request for the disk-in drive 222 of the subunit status descriptor 220 from the STB 100 during the formatting of the disk, the DVD recorder 200 outputs to the STB 100 the information indicating that the disk is not inserted, or insertion or extraction of the disk is unknown. In this manner, even if the DVD recorder 200 formats the disk to change the kind of disk, the disk can be controlled continuously.

The DVD disk 208 or the disk of this embodiment is an example of the replaceable disk of the invention, the route contents list 209 of this embodiment is an example of the descriptor of the invention, the route list ID 232 of this embodiment is an example of the descriptor identifier of the invention, the disk-in drive 222 of this embodiment is an example of the disk insertion or extraction information of the invention, the disk writing part 252 of this embodiment is an example of writing means of the invention, the 1394 I/F 250 of this embodiment is an example of output means of the invention, the STB 100 of this embodiment is an example of request means of the invention, the DVD recorder 200 of this embodiment is an example of the replaceable disk recording and reproducing apparatus of the invention, and the STB 100 of this embodiment is an example of the control device of the invention.

As will be apparent from the above description, in this embodiment, the disk-in drive is set "no disk" or "unknown" while the disk is being formatted, whereby there is the effect that the formatting operation of the disk is performed in a state where the disk is inserted, and even when the kind of disk is changed before and after formatting, the controller can control the replaceable disk recording and reproducing apparatus continuously.

Also, when the formatting of the disk is started, the route contents list is compulsorily closed and the reopening request is not accepted until the formatting of the disk is completed, whereby there is the excellent effect that the formatting operation of the disk is performed in a state where the disk is inserted, and even when the kind of disk is changedbefore and after formatting, the controller can control the replaceable disk recording and reproducing apparatus continuously.

Also, irrespective of whether or not the controller detects the insertion or extraction of the disk in the replaceable disk recording and reproducing apparatus, the route list ID is reread when the route contents list is reopened, and the route contents list is requested to be openedby designating the read route list ID, whereby there is the excellent effect that the formatting operation of the disk is performed in a state where the disk is inserted, and even when the kind of disk is changed before and after formatting, the controller can control the replaceable disk recording and reproducing apparatus continuously.

Also, irrespective of whether or not the controller detects the insertion or extraction of the disk in the replaceable disk recording and reproducing apparatus, the route list ID is reread when the route contents list is reopened, and the route contents list is opened by designating the read route list ID, to confirm the media type included in the opened route contents list, whereby there is the excellent effect that the formatting operation of the disk is performed in a state where the disk is inserted, and even when the kind of disk is changed before and after formatting, the controller can control the replaceable disk recording and reproducing apparatus continuously.

In this embodiment, the formatting of the disk is started from outside of the apparatus by a remote controller operation. However, the same effect is also achieved when the formatting is started by making the direct operation of the apparatus main body or receiving a command via the IEEE 1394.

The program of the invention causes a computer to perform the operation of all or part of the steps (or process, operation, action, etc.) in the disk information output method of the invention, while cooperating with the computer.

The recording medium of the invention carries a program that causes a computer to perform the operation of all or part of the steps (or process, operation, action, etc.) in the disk information output method of the invention, while the program readable by a computer and read by a computer cooperates with the computer to execute the operation.

The "part of the steps (orprocess, operation, action, etc.)" of the invention as used herein means one or more steps in the disk information output method.

Also, the "operation of steps (or process, operation, action, etc." of the invention as used herein means operation of all or part of the steps.

Also, in one use form, the program of the invention may be recorded in a computer readable recording medium and performed in cooperation with a computer.

Also, in one use form, the program of the invention may be transmitted through transmission media, read by a computer and performed in cooperation with a computer.

Also, the data structure of the invention involves a database, data format, data table, data list, and a kind of data.

Also, the recording media include a ROM, and the transmission media include the transmission medium such as the Internet, light, electric wave and sound wave.

Also, the computer of the invention is not limited to pure hardware such as CPU, but may include firmware, OS, and peripheral devices.

As described above, the configuration of the invention may be implemented by software or hardware. Industrial Applicability

In the light of the above-mentioned problems, the invention can provide a disk information output method, replaceable disk recording and reproducing apparatus, a control device, a program and a recording medium, in which even when the kind of disk inserted into the replaceable disk recording and reproducing apparatus is changed by formatting the disk, the control device can continue the control by detecting the kind of disk correctly.

## Claims

1. A disk information output method for making access to the disk information based on a descriptor identifier acquired from a replaceable disk recording and reproducing apparatus and stored by a control device, said descriptor identifier identifying a descriptor having the disk information of a replaceable disk in said replaceable disk recording and reproducing apparatus, said method comprising:
an output step of outputting to said control device the information indicating that reading said disk information is impossible or the information indicating that a read request is refused when said replaceable disk recording and reproducing apparatus receives said read request of said disk information from said control device having a read right of said descriptor and during initialization of said replaceable disk;
wherein when said control device requests again the read right of said descriptor firstly after said replaceable disk recording and reproducing apparatus outputs to said control device the information indicating that reading said disk information is impossible or the information indicating that said read request is refused, said descriptor identifier is acquired from said replaceable disk recording and reproducing apparatus by said control device.

2. The disk information output method according to claim 1, wherein said control device requests said replaceable disk recording and reproducing apparatus to acquire the disk insertion or extraction information upon polling.

3. The disk information output method according to claim 1, wherein said disk information has the disk identification information representing the kind of said replaceable disk and a recording format, and said control device detects a change in the kind of replaceable disk or the recording format in the said replaceable disk recording and reproducing apparatus, based on a comparison result between the disk identification information obtained by said control device acquiring the read right of said disk information and the disk identification information obtained by said control device acquiring the read right of said disk information at the previous time.

4. A program for causing a computer to perform an output step of outputting to said control device the information indicating that reading said disk information is impossible or the information indicating that said read request is refused when said replaceable disk recording and reproducing apparatus receives a read request of said disk information from said control device having the read right of said descriptor during initialization of said replaceable disk, of said disk information output method according to claim 1.

5. A recording medium carrying the program according to claim 4, wherein said recording medium can be processed by a computer.
